# EUROPEAN PATENT SPECIFICATION

(11) **EP 4 127 517 B1**
(45) Date of publication and mention of the grant of the patent: **09.12.2026**
(21) Application number: 21774490.3
(22) Date of filing: 22.03.2021
(51) Int. Cl.: F16H 57/028, F16H 57/00, B60K 7/00, B60K 1/04, B60K 6/20

(54) **SYSTEM FOR VEHICLE NOISE AND VIBRATION REDUCTION**
SYSTEM ZUR GERÄUSCH- UND SCHWINGUNGSREDUZIERUNG BEI FAHRZEUGEN
SYSTÈME DE RÉDUCTION DU BRUIT ET DES VIBRATIONS D'UN VÉHICULE

(30) Priority: 23.03.2020 US 202016827338
(43) Date of publication of application: 08.02.2023
(60) Divisional application: 26215973.4
(73) Proprietor: Karma Automotive, Inc., Irvine, CA 92618 (US)
(72) Inventor: VIJAY, Shashank, Irvine, California 92618 (US); VO, Melody, Irvine, California 92618 (US); KNITTEL, James, Irvine, California 92618 (US)
(74) Representative: Maikowski & Ninnemann Patentanwälte Partnerschaft mbB
(86) International application number: PCT/US2021/023513
(87) International publication number: WO 2021/194984

(56) References cited:
- WO-A1-2004/069573
- WO-A1-2015/198586
- DE-A1- 102010 007 642
- FR-A1- 3 082 804
- JP-A- 2012 251 642
- KR-A- 20130 094 652
- US-A1- 2008 143 029
- US-A1- 2008 258 569
- US-A1- 2008 258 569
- US-A1- 2016 065 038
- US-A1- 2016 065 038
- US-A1- 2019 248 222
- US-B1- 6 321 890
- US-B1- 6 321 890
- US-B2- 9 895 981

## Description

### GENERAL DESCRIPTION

The present disclosure relates to a power train of an electric vehicle. In particular, a rear drive module (RDM) of a vehicle having noise, vibration and harshness (NVH) countermeasures.

A vehicle may include a rear drive module that comprises one or more electric tractions motors configured to drive the wheels of the vehicle. An inverter system may also be provided in the RDM in order to convert D/C power from the main high voltage propulsive battery to A/C power in order to power the electric traction motors. The RDM may also comprise a transmission or a gearbox for changing the drive ratio between the motor and the vehicle wheels. Noise emitted from the gearbox and/or peak whine emitted by the inverter / traction motors and/or vibration between components of the vehicle / RDM may reduce passenger comfort and overall satisfaction of the passengers.

US 2016/065038 A1 describes a driving module with a vehicle driving motor, a case configured to accommodate the vehicle driving motor and an integrated control module mounted on the case and including a first power conversion device to drive the vehicle driving motor. The case includes an integrated control module case configured to protect the integrated control module.

US 6 321 890 B1 relates to a vibration reducing system comprising an insulator disposed between an engine and a vehicle body. A vibration damper is secured to the insulator at a side which is distal from the engine.

US 2008/0258569 A1 describes a vehicle driving apparatus including a rotating electrical machine, a power transmitting gear mechanism, and a case in which the rotating electrical machine and the gear mechanism are housed. Thereby, a low rigidity region located at an outer periphery of the rotating electrical machine is covered by a silencer supported on a high rigidity region of the case.

This application discloses a passive noise reduction system configured to reduce the amount of noise emitted from the RDM by providing acoustic dampening and mechanical dampening to reduce vibration.

### BRIEF DESCRIPTION OF THE DRAWINGS

The features, aspects, and advantages of the present disclosure will become apparent from the following description, and the accompanying exemplary embodiments shown in the drawings, which are briefly described below.
Figure 1A is an electric vehicle having a rear drive module.
Figure 1B is a drive train schematic of the vehicle shown in Figure 1A.
Figure 2 is a front side view of an exemplary rear drive module.
Figure 3 is a back side view of the rear drive module of Figure 2.
Figure 4 is a view of the rear drive module of Figure 2 including covers.
Figure 5 is a bottom view of the covered rear drive module of Figure 4.
Figure 6 is perspective view of the covers shown in Figure 4 and 5.
Figure 7 is a close up and exploded view of the mass dampener system of the rear drive module shown in Figure 2.
Figure 8 is a sectional view of the mass dampener system.

### DETAILED DESCRIPTION

According to one embodiment of the disclosure, a drive module is provided for a vehicle. The drive module includes at least one electric motor configured to drive wheels of the vehicle, a gearbox mechanically attached to the at least one electric motor. The gearbox is configured to receive output from the at least one electric motor. An inverter is provided to provide power for the at least one electric motor from a battery of the vehicle. The drive module includes an acoustic wrap configured to dampen noise emitted from the drive module, and a mass dampener attached to a motor of the at least one electric motor configured to reduce vibration of the drive module.

According to another exemplary embodiment, a vehicle includes a main propulsive battery pack. The vehicle further includes a drive module. The drive module includes at least one electric motor configured to drive wheels of the vehicle, a gearbox mechanically attached to the at least one electric motor, wherein the gearbox is configured to receive output from the at least one electric motor, an inverter configured to provide power for the at least one electric motor from a battery of the vehicle, an acoustic wrap configured to dampen noise emitted from the drive module, and a mass dampener attached to a motor of the at least one electric motor configured to reduce vibration of the drive module.

According to another exemplary embodiment, a rear drive module for a drive train of an electric vehicle is provided. The rear drive module includes a pair of electric motors each configured to drive a corresponding rear wheel of the vehicle, a gearbox mechanically attached to the at least one electric motor. Wherein the gearbox is configured to receive output from the pair of electric motors, a pair of inverters corresponding to each electric motor configured to convert power from the battery of the vehicle to corresponding motor of the pair of electric motors. A first and second acoustic wrap attached to and covering a corresponding electric motor of the pair of electric motors. A pair of mass dampeners attached to a corresponding electric motor of the pair of electric motors, wherein the mass dampeners configured to reduce vibration of the drive module. Wherein the pair of mass dampeners is attached to corresponding mounting points of the vehicle frame.

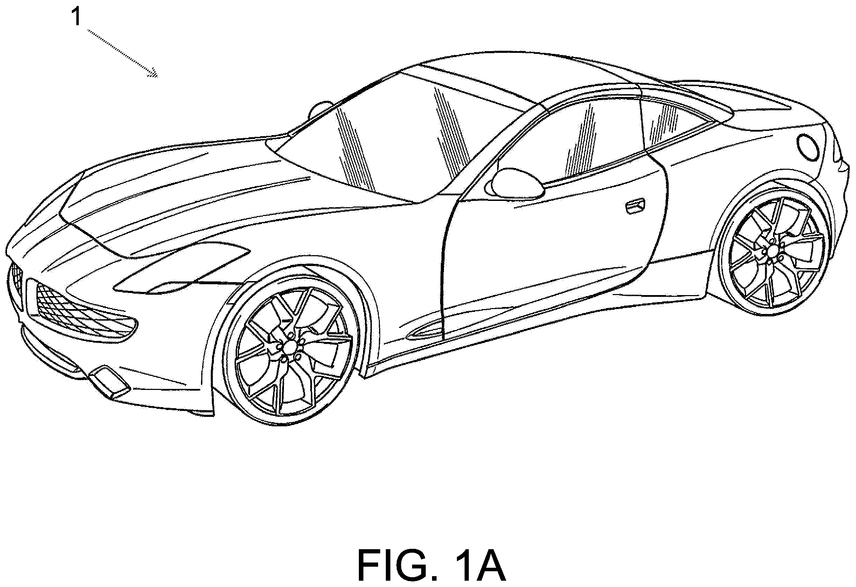

FIG. 1A illustrates a vehicle 1 having a high voltage propulsive battery connected to a rear drive module (RDM) (not shown; inside the vehicle 1) configured to drive the rear wheels of the vehicle. Although a rear drive module is shown and described for exemplary purposes, the scope of the NVH reduction system disclosed herein is not limited to rear drive modules. The disclosed system may be employed with drive modules for one or more vehicle wheels, regardless of location of the drive module or the wheel(s) being driven.

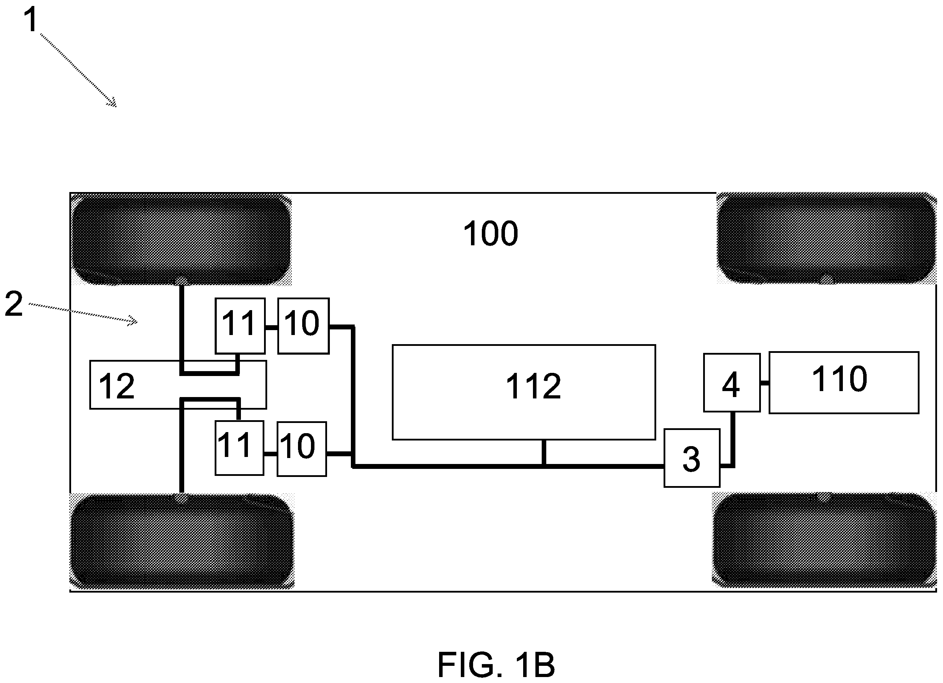

FIG. 1B shows an electric vehicle 1 with the drivetrain 100, the exemplary vehicle includes an internal combustion engine 110, a generator 4, and electric traction motors 11. The internal combustion engine 110 drives the generator 4 to produce electrical power for a battery 112 and the motors 11. A generator inverter 3 connected to the generator 2 may also be provided. A gearbox 12 is configured to provide the required drive ratio for the vehicle. Power to the motors 11 is communicated via inverters 10, which transforms DC power provided to the AC power required by the motors 11.

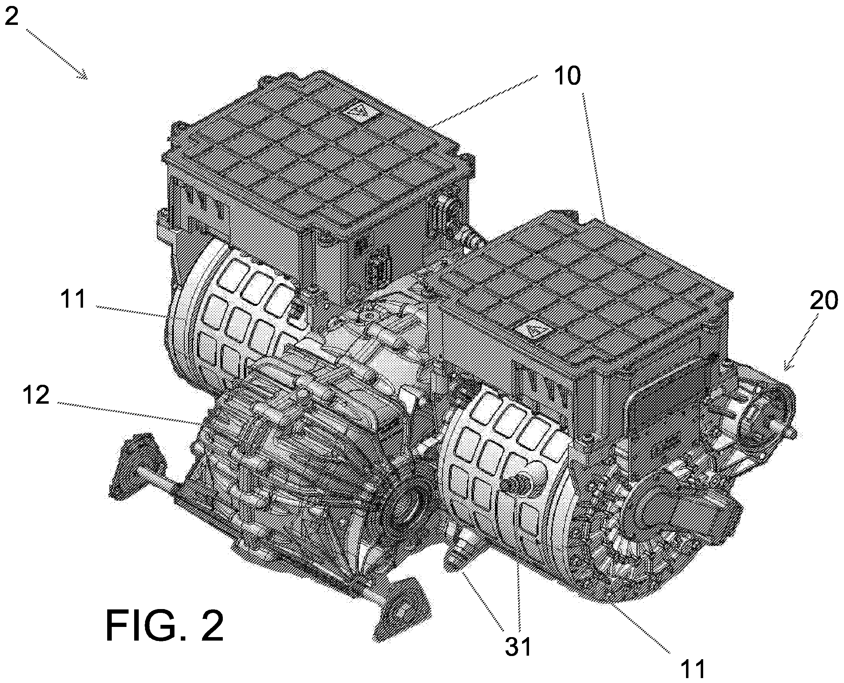

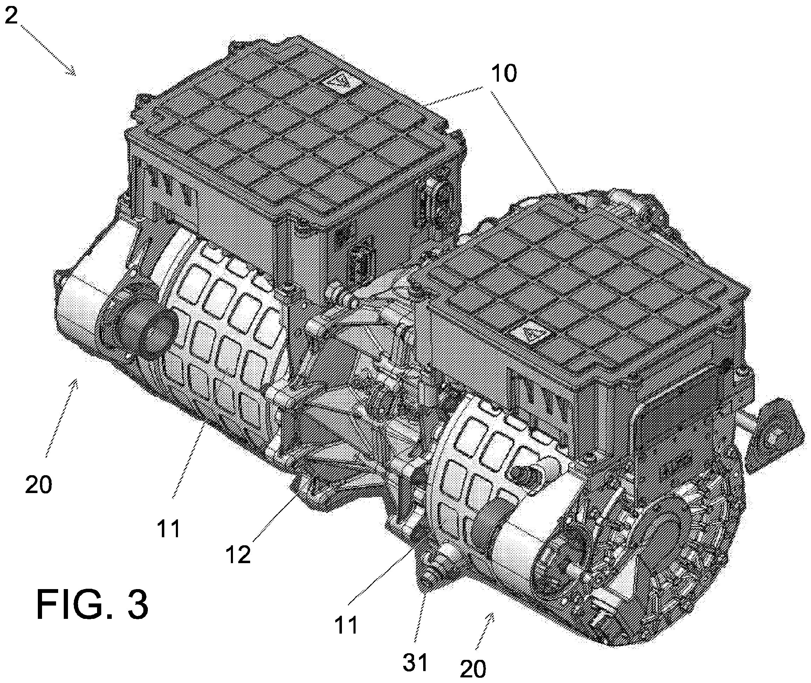

FIGS. 2 and 3 show an exemplary RDM 2 having one or more electric traction motors 11. Inverters 10 are configured to convert D/C power from the main high voltage propulsive battery (not shown) to A/C power in order to power the traction motors 11. The traction motors are connected to a transmission / gearbox 12 for changing the drive ratio between the motor and the vehicle wheels. Dampener assemblies 20 may be inserted into each frame of the electric motors 11. The dampener assembly is configured to act as a mass dampener and reduce the vibration of the RDM 2. Each inverter 10 may be attached to corresponding electric motor 11, and each electric motor 11 is attached to the gearbox 12. Thus, the components of RDM 2 are mechanically attached to at least the electric motor 11. The mechanism of the mass dampener assemblies 20 is explained further below.

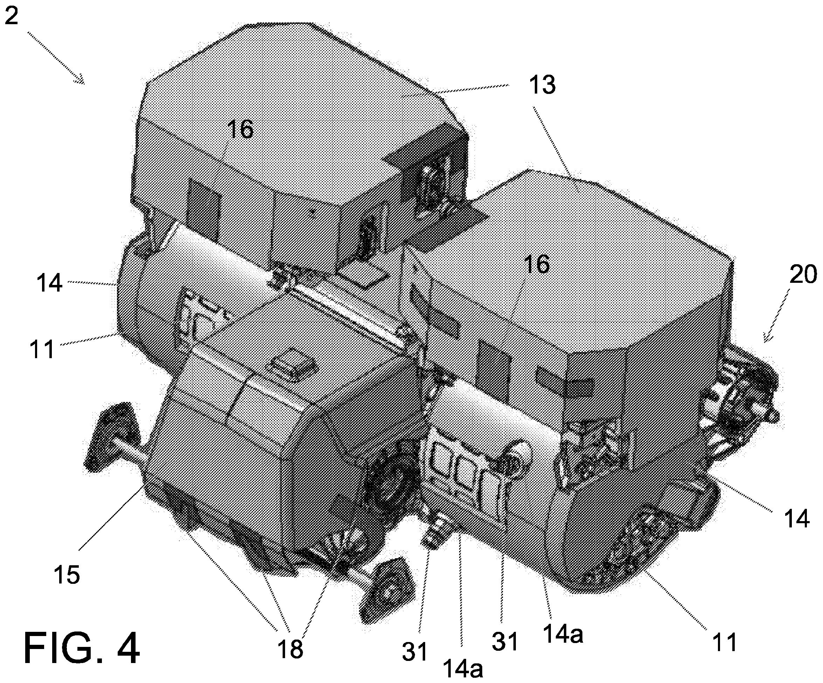

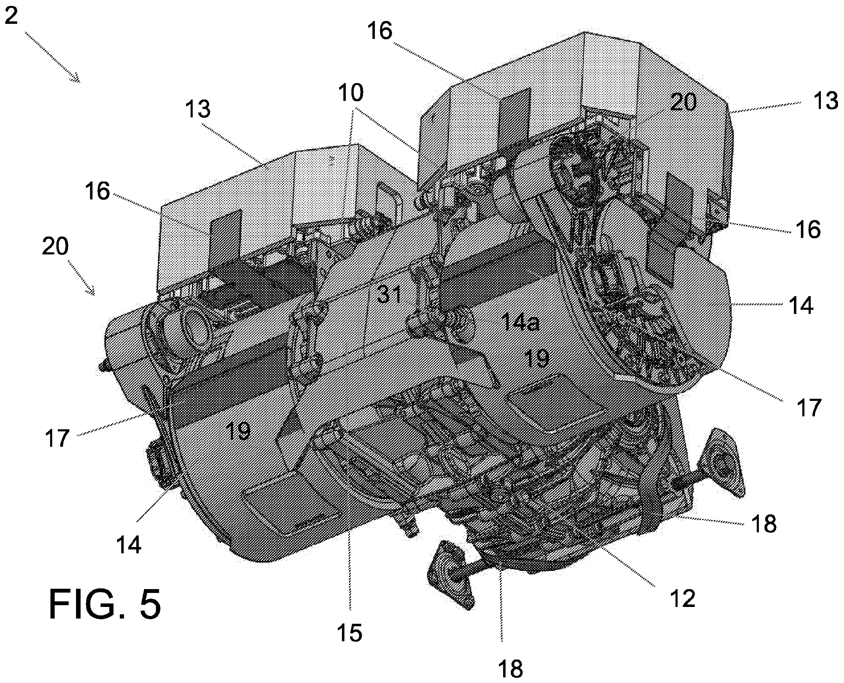

FIGs. 4 and 5 shows the RDM 2 having acoustic wraps 13, 14, and 15. Each corresponding acoustic wrap 13, 14, and 15 is configured to conform to the shape of the corresponding component covered by each wrap 13, 14, and 15. For example, the acoustic wrap 13 conforms to the shape of inverters 10, the acoustic wrap 14 confirms to the shape of the electric motors 11, and the acoustic wrap 15 conforms to the shape of the transmission / gearbox 12. Each acoustic wrap includes attachments 16 / 17 / 18 / 19 configured to hold the wrap in place onto the corresponding covered components. Attachment 16 is configured to be attached or fastened onto the inverter cover 13 and structurally support the inverter cover 13. Attachment 16 may also be attached to a portion of the electrical motor 11. The attachment 16 may also extend from side to side as shown in FIG. 4 and FIG. 5, where attachment 16 extends from one side of the inverter cover 13 shown in FIG. 5 to the opposite side of the inverter cover shown in FIG. 4. Attachments 19 may include tabs that prevent the gearbox acoustic wrap 15 from being detached. The attachments 18 may include a band extending from a side of the gearbox acoustic wrap 15 towards the bottom of the gearbox wrap 15 and ending at the front of gearbox wrap as shown in FIG. 4. The attachments 17 of the acoustic wrap 14 of the electric motors 11 may also include Velcro (e.g. hook and loop fastener) configured to hold and close the acoustic wrap 14 around the electric motors 11.

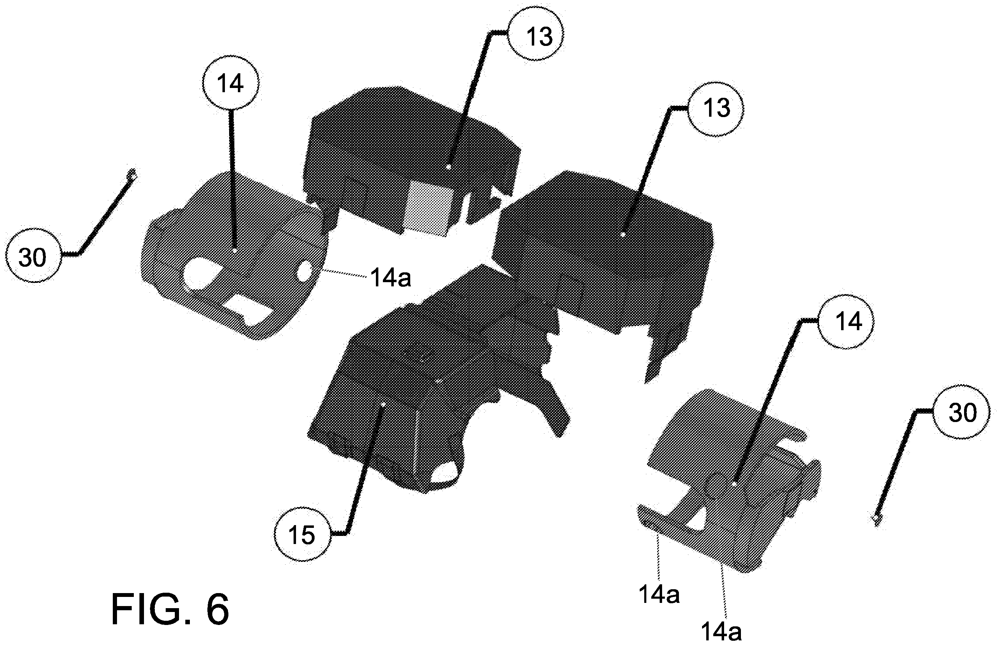

FIG. 6 shows an isolated view of each wrap 13 / 14 / 15. A retaining fastener 30 may be provided to hold the cover 14 to the corresponding motors 11. Retaining fastener 30 may be a ratchet type fastener (e.g. Christmas tree clip). The retaining fasteners 30 are configured to be inserted into the frame 11a of the corresponding motor 11. The attachments 16-19 may be made integral to the corresponding attached acoustic cover. The attachments 16, 18, and 19 may be attached to the corresponding elements via Velcro (i.e. hook and loop fasteners) similar to attachment 17. For example, tabs 19 of wrap 15 may be attached onto wrap 14 via Velcro, and endpoints of attachment 16 may include Velcro attachment to its corresponding structure at the end of the attachments. Each acoustic wrap 13 / 14 / 15 may include two or more layers of materials and may include a heavy layer barrier in addition to an lightweight acoustic de-coupler and an anti-abrasive scrim on inner and outer surfaces of the acoustic wraps 13 / 14 / 15 to improve handling of the warps, ward of external contaminants, and improve heat resistance. Materials are chosen for acoustic performance while also managing temperature requirements and environmental constraints. The wraps 13 / 14 / 15 encloses all necessary surfaces while leaving adequate ventilation for cooling and clearance to moving/rotating parts. This system reduces noise coming from the RDM 2, specifically high frequency noise (>500hz). The shape of the wrap 13 / 14 / 15 may also accommodate for additional systems of the RDM 2. For example, the wrap 14 of the electric motor may accommodate for cooling ports 31 shown in FIGs 2-5 via cutout 14a. Cutout 14a allows the warp 14 to accommodate for cooling ports 31 while also allowing the cooling ports 31 to act as a lock to prevent the wrap 14 from moving or sliding.

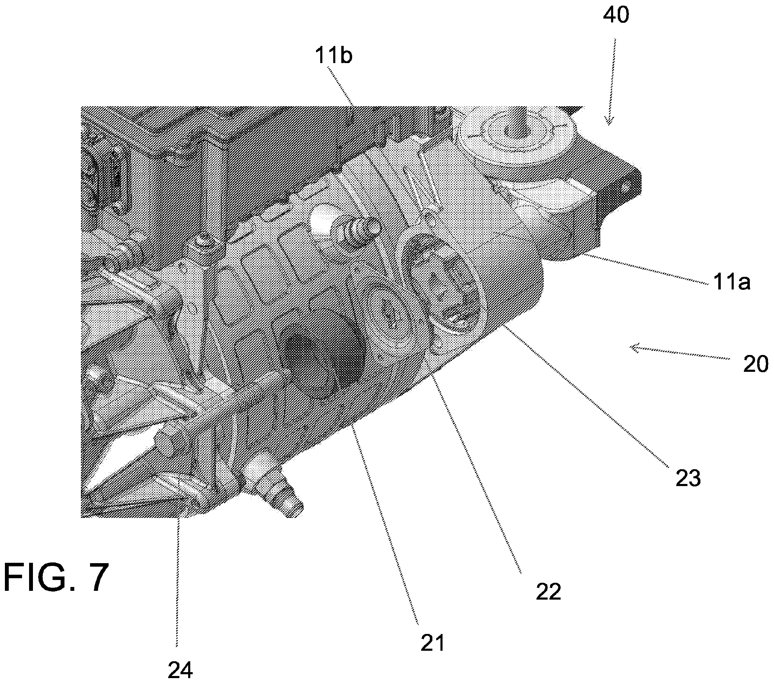

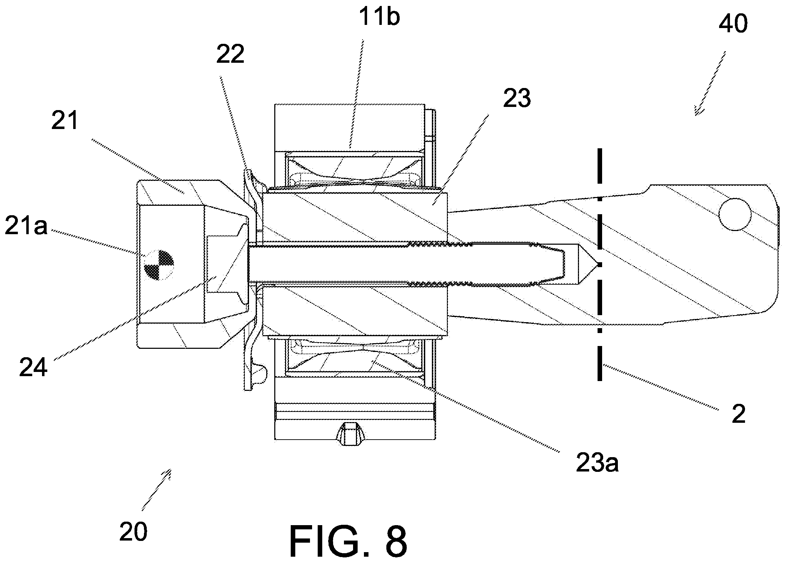

FIG. 7 shows a close up and exploded view of the mass dampener assembly 20. The mass dampener assembly 20 may be inserted into a frame 11a of the electric traction motor 11. The dampener assembly includes an insert 23, a plate 22, a bolt 24, and a detuning mass 21. Each electric motor 11 is configured to be attached to a mounting structure 40 of the vehicle 1. The mounting structure 40 may be an attachment point of the vehicle frame of the vehicle 1. The insert 23 is configured to be located in an opening 11b of the electric motor frame 11a. The plate 22 configured to be placed between the insert 23 and the detuning mass 21. The head of the bolt 24 is configured to sit inside an opening of the detuning mass 21. The plate 22 is configured to support the detuning mass 21. As shown in FIG. 8, this configuration allows the center of gravity 21a of the detuning mass 21 to sit further from the structural fulcrum 25 of the RDM 2. The structural fulcrum 25 is the pivot point of vibrational movement due to forces from the RDM 2. The mass dampener assembly 20 is configured to reduce the vibration of RDM 2 relative to the structural fulcrum. Insert 23 may be flexible and may include springs 23a in order to provide vibration detuning via the mass dampener 21. The mass dampener assembly 20 added is configured to effectively increase dynamic stiffness of rear drive module mounting structure 40, thereby minimizing structure borne noise. The detuning mass 21 is designed such that the fastener length can be minimized. The cup shape of the detuning mass 21 allows convenient installation and easy tool access. The cup design also allows the center of gravity of the mass 21a to be distant from the mount location to maximize the effectiveness of the dampening assembly 20. Insert 23 may also comprise of a rubber material configured to isolate further structural vibrations of the RDM 2 and mounting structure 40, specifically structural low frequency noise. The materials may include a composite sandwich of materials, ordered from the inner layer to outer layer, comprising of an approximately 0.05mm thick 30oz scrim, approximately 7mm thick lightweight polyurethane foam, approximately 2.5mm thick heavyweight EVA (Etholyne/Vinyl/Acetate formulation), and approximately 0.05mm thick 40z scrim. The lightweight layer should lay closest to the RDM 2, with the heavyweight layer nearer to the outside. Thus the 30oz scrim lays closest to the RDM 2 while the 40oz scrim is located the furthest. Although only one side of the RDM 2 is shown in FIG. 2, the configuration of mass dampener assembly 20 shown in FIG. 7 and 8 is also provided on the other electric motor 11.

## Claims

1. A drive module (2) for a vehicle (1), the drive module (2) comprising:
at least one electric motor (11) configured to drive wheels of the vehicle (1);
a gearbox (12) mechanically attached to the at least one electric motor (11), wherein the gearbox (12) is configured to receive output from the at least one electric motor (11);
an inverter (10) configured to provide power for the at least one electric motor (11) from a battery of the vehicle (1);
an acoustic wrap (13, 14, 15) configured to dampen noise emitted from the drive module (2); **characterized by**
a mass dampener attached to a motor (11) of the at least one electric motor (11) configured to reduce vibration of the drive module (2); and
an inverter acoustic wrap (13) configured to be attached to and cover the inverter (10) in order to significantly dampen noise from the inverter (10) and to be attached to the motor (11) of the at least one electric motor (11).

2. The drive module (2) of claim 1, wherein the acoustic wrap (13, 14, 15) is an electric motor acoustic wrap (14) configured to be attached to and cover the motor (11) of at least one electric motor (11) in order to significantly dampen noise from the motor (11).

3. The drive module (2) of claim 2, wherein the electric motor acoustic wrap (14) includes a motor attachment (17) configured to hold the electric motor acoustic wrap (14) onto the motor (11) of the at least one electric motor (11) and close the electric motor acoustic wrap (14).

4. The drive module (2) of claim 1, wherein the inverter acoustic wrap (13) includes a first inverter attachment (16) configured to hold the inverter acoustic wrap (13) onto the inverter (10) and the first inverter attachment (16) is fastened onto the inverter (10).

5. The drive module (2) of claim 4, wherein the inverter acoustic wrap (13) includes a second inverter attachment (16) configured to hold the inverter acoustic wrap (13) onto the motor (11) of the at least one electric motor (11) and the second inverter attachment (16) is fastened onto the motor (11) of the at least one electric motor (11).

6. The drive module (2) of claim 1, wherein the gearbox (12) includes a gearbox acoustic wrap (15), configured to be attached to and cover the gearbox (12) in order to significantly dampen noise from the gearbox (12).

7. The drive module of claim 6, wherein the gearbox acoustic wrap (15) includes attachment tabs (19) configured to hold the gearbox acoustic wrap (15) onto the gearbox (12).

8. The drive module (2) of claim 1, wherein the mass dampener comprises:
an insert (23) located inside an opening of a frame of the motor (11) of the at least one electric motor (11), wherein the insert is configured to receive a bolt (24); and
a detuning mass (21) directly adjacent a plate (22), wherein the plate (22) abuts the insert (23),
wherein said bolt (24) extends through the detuning mass (21), the plate (22), and the insert (23) and is configured to be attached to a mounting point of the vehicle (1) at the end of the bolt (24), and
wherein the detuning mass (21) is configured to dampen the vibrations of the drive module (2).

9. A vehicle (1) comprising:
a main propulsive battery; and
the drive module (2) of any one of the preceding claims,
wherein the drive module (2) is electrically connected to the main propulsive battery and wherein the inverter (10) is configured to provide power for the at least one electric motor (11) from the main propulsive battery.

10. A rear drive module (2) for a drive train of an electric vehicle (1), the rear drive module (2) comprising:
a pair of electric motors (11) each configured to drive a corresponding rear wheel of the electric vehicle (1);
a gearbox (12) mechanically attached to the pair of electric motors (11), wherein the gearbox (12) is configured to receive output from the pair of electric motors (11);
a pair of inverters (10) corresponding to each electric motor (11) configured to convert power from a battery of the electric vehicle (1) to a corresponding motor (11) of the pair of electric motors (11);
a first and second acoustic wrap (13, 14, 15) attached to and covering a corresponding electric motor (11) of the pair of electric motors (11);
a pair of mass dampeners attached to a corresponding electric motor of the pair of electric motors (11), wherein the mass dampeners are configured to reduce vibration of the rear drive module (2), and wherein the pair of mass dampeners is attached to corresponding mounting points (40) of a vehicle frame; and
an inverter acoustic wrap (13) configured to be attached to and cover the pair of inverters (10) in order to significantly dampen noise from the pair of inverters (10) and to be attached to the pair of electric motors (11).

11. The rear drive module (2) of claim 10, wherein each of the mass dampeners comprises:
an insert (23) located inside an opening of a corresponding frame of the pair of electric motor (11), wherein the insert (23) is configured to receive a bolt (24);
a detuning mass (21) directly adjacent a plate (22), wherein the plate (22) abuts the insert (23);
said bolt (24) extends through the detuning mass (21), the plate (22), and the insert (23) and is configured to be attached to a corresponding mounting point (40) of the vehicle (1) at the end of the bolt (24);
wherein the detuning mass (21) is configured to dampen the vibrations of the rear drive module (2).

## Patentansprüche

1. Antriebsmodul (2) für ein Fahrzeug (1), wobei das Antriebsmodul (2) Folgendes umfasst:
mindestens einen Elektromotor (11), der zum Antreiben von Rädern des Fahrzeugs (1) ausgelegt ist;
ein Getriebe (12), das mechanisch mit dem mindestens einen Elektromotor (11) verbunden ist, wobei das Getriebe (12) zum Empfangen einer Ausgabe von dem mindestens einen Elektromotor (11) ausgelegt ist;
einen Wechselrichter (10), der zum Bereitstellen von Strom für den mindestens einen Elektromotor (11) aus einer Batterie des Fahrzeugs (1) ausgelegt ist;
eine akustische Ummantelung (13, 14, 15), die zum Dämpfen von Geräuschen, die von dem Antriebsmodul (2) emittiert werden, ausgelegt ist; **gekennzeichnet durch**
einen Massendämpfer, der an einem Motor (11) des mindestens einen Elektromotors (11) angebracht und zum Reduzieren von Vibration des Antriebsmoduls (2) ausgelegt ist; und
eine akustische Wechselrichterummantelung (13), die zum Anbringen an und Abdecken von dem Wechselrichter (10), um Geräusche von dem Wechselrichter (10) signifikant zu dämpfen, und zum Anbringen an dem Motor (11) des mindestens einen Elektromotors (11) ausgelegt ist.

2. Antriebsmodul (2) nach Anspruch 1, wobei es sich bei der akustischen Ummantelung (13, 14, 15) um eine akustische Elektromotorummantelung (14) handelt, die zum Anbringen an und Abdecken von dem Motor (11) mindestens eines Elektromotors (11) ausgelegt ist, um Geräusche von dem Motor (11) signifikant zu dämpfen.

3. Antriebsmodul (2) nach Anspruch 2, wobei die akustische Elektromotorummantelung (14) eine Motorbefestigung (17) beinhaltet, die zum Halten der akustischen Elektromotorummantelung (14) an dem Motor (11) des mindestens einen Elektromotors (11) und Schließen der akustischen Elektromotorummantelung (14) ausgelegt ist.

4. Antriebsmodul (2) nach Anspruch 1, wobei die akustische Wechselrichterummantelung (13) eine erste Wechselrichterbefestigung (16) beinhaltet, die zum Halten der akustischen Wechselrichterummantelung (13) an dem Wechselrichter (10) ausgelegt ist, und die erste Wechselrichterbefestigung (16) an dem Wechselrichter (10) befestigt ist.

5. Antriebsmodul (2) nach Anspruch 4, wobei die akustische Wechselrichterummantelung (13) eine zweite Wechselrichterbefestigung (16) beinhaltet, die zum Halten der akustischen Wechselrichterummantelung (13) an dem Motor (11) des mindestens einen Elektromotors (11) ausgelegt ist, und die zweite Wechselrichterbefestigung (16) an dem Motor (11) des mindestens einen Elektromotors (11) befestigt ist.

6. Antriebsmodul (2) nach Anspruch 1, wobei das Getriebe (12) eine akustische Getriebeummantelung (15) beinhaltet, die zum Anbringen an und Abdecken von dem Getriebe (12) ausgelegt ist, um Geräusche von dem Getriebe (12) signifikant zu dämpfen.

7. Antriebsmodul nach Anspruch 6, wobei die akustische Getriebeummantelung (15) Befestigungslaschen (19) beinhaltet, die zum Halten der akustischen Getriebeummantelung (15) an dem Getriebe (12) ausgelegt sind.

8. Antriebsmodul (2) nach Anspruch 1, wobei der Massendämpfer Folgendes umfasst:
einen Einsatz (23), der sich im Inneren einer Öffnung eines Rahmens des Motors (11) des mindestens einen Elektromotors (11) befindet, wobei der Einsatz zum Aufnehmen einer Schraube (24) ausgelegt ist; und
eine Verstimmmasse (21) unmittelbar benachbart zu einer Platte (22), wobei die Platte (22) an dem Einsatz (23) anliegt,
wobei sich die Schraube (24) durch die Verstimmmasse (21), die Platte (22) und den Einsatz (23) erstreckt und zum Befestigen an einem Montagepunkt des Fahrzeugs (1) an dem Ende der Schraube (24) ausgelegt ist und
wobei die Verstimmmasse (21) zum Dämpfen der Vibrationen des Antriebsmoduls (2) ausgelegt ist.

9. Fahrzeug (1), umfassend:
eine Hauptantriebsbatterie; und
das Antriebsmodul (2) nach einem der vorhergehenden Ansprüche,
wobei das Antriebsmodul (2) elektrisch mit der Hauptantriebsbatterie verbunden ist und wobei der Wechselrichter (10) zum Bereitstellen von Strom für den mindestens einen Elektromotor (11) aus der Hauptantriebsbatterie ausgelegt ist.

10. Hinteres Antriebsmodul (2) für einen Antriebsstrang eines Elektrofahrzeugs (1), wobei das hintere Antriebsmodul (2) Folgendes umfasst:
ein Paar an Elektromotoren (11), die jeweils zum Antreiben eines entsprechenden Hinterrads des Elektrofahrzeugs (1) ausgelegt sind;
ein Getriebe (12), das mechanisch mit dem Paar Elektromotoren (11) verbunden ist, wobei das Getriebe (12) zum Empfangen einer Ausgabe von dem Paar Elektromotoren (11) ausgelegt ist;
ein Paar von Wechselrichtern (10), die jeweils einem Elektromotor (11) zugeordnet und zum Umwandeln von Strom von einer Batterie des Elektrofahrzeugs (1) zu einem entsprechenden Motor (11) des Paares Elektromotoren (11) ausgelegt sind;
eine erste und zweite akustische Ummantelung (13, 14, 15), die an einem entsprechenden Elektromotor (11) des Paares Elektromotoren (11) angebracht sind und diesen abdecken;
ein Paar von Massendämpfern, die an einem entsprechenden Elektromotor des Paares Elektromotoren (11) angebracht sind, wobei die Massendämpfer zum Reduzieren von Vibration des hinteren Antriebsmoduls (2) ausgelegt sind und wobei das Paar von Massendämpfern an entsprechenden Montagepunkten (40) eines Fahrzeugrahmens befestigt ist; und
eine akustische Wechselrichterummantelung (13), die zum Anbringen an und Abdecken von dem Paar von Wechselrichtern (10), um Geräusche von dem Paar Wechselrichter (10) signifikant zu dämpfen, und zum Anbringen an dem Paar Elektromotoren (11) ausgelegt ist.

11. Hinteres Antriebsmodul (2) nach Anspruch 10, wobei jeder der Massendämpfer Folgendes umfasst:
einen Einsatz (23), der sich im Inneren einer Öffnung eines entsprechenden Rahmens des Paares an Elektromotoren (11) befindet, wobei der Einsatz (23) zum Aufnehmen einer Schraube (24) ausgelegt ist;
eine Verstimmmasse (21), die sich unmittelbar benachbart zu einer Platte (22) befindet, wobei die Platte (22) an dem Einsatz (23) anliegt;
sich die Schraube (24) durch die Verstimmmasse (21), die Platte (22) und den Einsatz (23) erstreckt und zum Befestigen an einem entsprechenden Montagepunkt (40) des Fahrzeugs (1) an dem Ende der Schraube (24) ausgelegt ist;
wobei die Verstimmmasse (21) zum Dämpfen der Vibrationen des hinteren Antriebsmoduls (2) ausgelegt ist.

## Revendications

1. Module d'entraînement (2) pour un véhicule (1), le module d'entraînement (2) comprenant :
au moins un moteur électrique (11) configuré pour entraîner des roues du véhicule (1) ;
une boîte de vitesses (12) reliée mécaniquement à l'au moins un moteur électrique (11), dans lequel la boîte de vitesses (12) est configurée pour recevoir de la sortie en provenance de l'au moins un moteur électrique (11) ;
un onduleur (10) configuré pour fournir de la puissance à l'au moins un moteur électrique (11) à partir d'une batterie du véhicule (1) ;
un revêtement acoustique (13, 14, 15) configuré pour atténuer du bruit émis par le module d'entraînement (2) ; **caractérisé par** un amortisseur à masse attaché à un moteur (11) parmi l'au moins un moteur électrique (11) configuré pour réduire des vibrations du module d'entraînement (2) ; et
un revêtement acoustique d'onduleur (13) configuré pour être attaché à l'onduleur (10), et recouvrir celui-ci, afin d'atténuer considérablement du bruit en provenance de l'onduleur (10), et pour être attaché au moteur (11) parmi l'au moins un moteur électrique (11).

2. Module d'entraînement (2) selon la revendication 1, dans lequel le revêtement acoustique (13, 14, 15) est un revêtement acoustique de moteur électrique (14) configuré pour être attaché au moteur (11) parmi l'au moins un moteur électrique (11), et recouvrir celui-ci, afin d'atténuer considérablement du bruit en provenance du moteur (11).

3. Module d'entraînement (2) selon la revendication 2, dans lequel le revêtement acoustique de moteur électrique (14) comporte un élément de fixation de moteur (17) configuré pour maintenir le revêtement acoustique de moteur électrique (14) sur le moteur (11) parmi l'au moins un moteur électrique (11) et refermer le revêtement acoustique de moteur électrique (14).

4. Module d'entraînement (2) selon la revendication 1, dans lequel le revêtement acoustique d'onduleur (13) comporte un premier élément de fixation d'onduleur (16) configuré pour maintenir le revêtement acoustique d'onduleur (13) sur l'onduleur (10) et le premier élément de fixation d'onduleur (16) est fixé sur l'onduleur (10).

5. Module d'entraînement (2) selon la revendication 4, dans lequel le revêtement acoustique d'onduleur (13) comporte un second élément de fixation d'onduleur (16) configuré pour maintenir le revêtement acoustique d'onduleur (13) sur le moteur (11) parmi l'au moins un moteur électrique (11) et le second élément de fixation d'onduleur (16) est fixé sur le moteur (11) parmi l'au moins un moteur électrique (11).

6. Module d'entraînement (2) selon la revendication 1, dans lequel la boîte de vitesses (12) comporte un revêtement acoustique de boîte de vitesses (15), configuré pour être attaché à la boîte de vitesses (12), et recouvrir celle-ci, afin d'atténuer considérablement du bruit en provenance de la boîte de vitesses (12).

7. Module d'entraînement selon la revendication 6, dans lequel le revêtement acoustique de boîte de vitesses (15) comporte des languettes d'attachement (19) configurées pour maintenir le revêtement acoustique de boîte de vitesses (15) sur la boîte de vitesses (12).

8. Module d'entraînement (2) selon la revendication 1, dans lequel l'amortisseur à masse comprend :
un insert (23) situé à l'intérieur d'une ouverture d'un carter du moteur (11) parmi l'au moins un moteur électrique (11), dans lequel l'insert est configuré pour recevoir un boulon (24) ; et
une masse de désaccordage (21) directement adjacente à une plaque (22), dans lequel la plaque (22) vient en butée contre l'insert (23),
dans lequel ledit boulon (24) s'étend à travers la masse de désaccordage (21), la plaque (22) et l'insert (23) et est configuré pour être attaché à un point de montage du véhicule (1) à l'extrémité du boulon (24), et
dans lequel la masse de désaccordage (21) est configurée pour atténuer les vibrations du module d'entraînement (2).

9. Véhicule (1) comprenant :
une batterie de propulsion principale ; et
le module d'entraînement (2) selon l'une quelconque des revendications précédentes,
dans lequel le module d'entraînement (2) est connecté électriquement à la batterie de propulsion principale et dans lequel l'onduleur (10) est configuré pour fournir de la puissance à l'au moins un moteur électrique (11) à partir de la batterie de propulsion principale.

10. Module d'entraînement arrière (2) pour une transmission d'un véhicule électrique (1), le module d'entraînement arrière (2) comprenant :
une paire de moteurs électriques (11), chacun de ceux-ci étant configuré pour entraîner une roue arrière correspondante du véhicule électrique (1) ;
une boîte de vitesses (12) fixée mécaniquement à la paire de moteurs électriques (11), dans lequel la boîte de vitesses (12) est configurée pour recevoir de la sortie en provenance de la paire de moteurs électriques (11) ;
une paire d'onduleurs (10) correspondants à chaque moteur électrique (11) configurés pour la conversion de la puissance en provenance d'une batterie du véhicule électrique (1) vers un moteur correspondant (11) parmi la paire de moteurs électriques (11) ;
un premier et un second revêtement acoustique (13, 14, 15) attachés à un moteur électrique correspondant (11) parmi la paire de moteurs électriques (11), et recouvrant celui-ci ;
une paire d'amortisseurs à masse attachés à un moteur électrique correspondant parmi la paire de moteurs électriques (11), dans lequel les amortisseurs à masse sont configurés pour réduire des vibrations du module d'entraînement arrière (2), et dans lequel la paire d'amortisseurs à masse est attachée à des points de montage correspondants (40) d'un carter de véhicule ; et
un revêtement acoustique d'onduleur (13) configuré pour être attaché à la paire d'onduleurs (10), et recouvrir ceux-ci, afin d'atténuer considérablement du bruit en provenance de la paire d'onduleurs (10) et pour être attaché à la paire de moteurs électriques (11).

11. Module d'entraînement arrière (2) selon la revendication 10, dans lequel chacun des amortisseurs à masse comprend :
un insert (23) situé à l'intérieur d'une ouverture d'un carter correspondant de la paire de moteurs électriques (11), dans lequel l'insert (23) est configuré pour recevoir un boulon (24) ;
une masse de désaccordage (21) directement adjacente à une plaque (22), dans lequel la plaque (22) vient en butée contre l'insert (23) ;
ledit boulon (24) s'étend à travers la masse de désaccordage (21), la plaque (22) et l'insert (23) et est configuré pour être attaché à un point de montage correspondant (40) du véhicule (1) à l'extrémité du boulon (24) ;
dans lequel la masse de désaccordage (21) est configurée pour atténuer les vibrations du module d'entraînement arrière (2).
